(19) Europäisches Patentamt
European Patent Office
Office européen des brevets

(11) **EP 3 136 069 B1**

(12) **EUROPEAN PATENT SPECIFICATION**

(45) Date of publication and mention
of the grant of the patent:
**09.10.2019 Bulletin 2019/41**

(51) Int Cl.:
***G01L 1/12*** *(2006.01)*    ***G01L 3/24*** *(2006.01)*
***G01L 5/03*** *(2006.01)*

(21) Application number: **15182123.8**

(22) Date of filing: **24.08.2015**

(54) **A FORCE SENSOR**

KRAFTSENSOR

CAPTEUR DE FORCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.03.2017 Bulletin 2017/09**

(73) Proprietor: **Magnes Ltd.
8001 Zürich (CH)**

(72) Inventor: **GERVASONI, Simone
6702 Claro (CH)**

(74) Representative: **P&TS SA (AG, Ltd.)
Av. J.-J. Rousseau 4
P.O. Box 2848
2001 Neuchâtel (CH)**

(56) References cited:
**EP-A1- 1 380 927        EP-A1- 1 586 983
EP-A1- 2 186 657        EP-A1- 2 741 063
GB-A- 2 403 296         JP-A- 2010 210 461
US-A- 4 291 894         US-A- 5 325 869
US-A1- 2007 245 835**

EP 3 136 069 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention:

This invention is related to power measuring devices for sports or games based on the interaction between magnetic sensors and magnetic bodies.

### Description of the Related Art:

Performance monitoring with smart sensors is gaining popularity among both sports enthusiasts and professionals. Power measurement tools for cycling have been on market for more than a decade and the market for powermeters is rapidly growing. Through precise power measurements it is possible to analyze and effectively improve training performance of cyclists. The powermeters help the cyclist to optimize his/her power management during each pedaling cycle. Many devices have been developed in the past to measure and estimate the power transfer between the cyclist and the bicycle. There are a number of devices that differentiate themself by mounting type, sensing elements, and measuring technologies. The following list gives an overview of existing devices.

- a powermeter mounted on the crank of the bicycle and exploits a series of strain gauges to measure the torque transmitted by the cyclist through the pedal to the chain. The data acquired by the system is transmitted wirelessly to an onboard computer.
- a powermeter installed inside the locking pedal of the bicycle, where a set of strain gauges is used to determine the pressure exerted on it. The device comprises a locking pedal and an external on board computer using wireless communication.
- a system which is based on strain gauges installed in the wheel hub of the bicycle. The system is installed in the rear wheel and needs to be specially made for every type of bicycle. The data is transferred wirelessly to any compatible device.
- a powermeter consisting of a special crank set and allows measuring the power distribution on both pedal arms revealing asymmetry in the pedaling. The system works based on torque measurement on the crank arms using strain gauges.
- a powermeter in which strain gauges are installed inside the crank arm and not in the crank spider. The device measures the bending introduced in the crank arm when an external force is applied on it. Additionally, a set of accelerometers is used to estimate the turns on the crankshaft. The system only measures the forces on the left arm and makes the assumption that the system is symmetric.
- a powermeter which uses an array of eight strain gauges installed on the pedal shaft to measure the shaft deflection. The power is than derived from the measured deflection. The total power is than computed by doubling the measured power. The device is able to transmit wireless data to an onboard computer or to a smartphone.
- Patent US 8122773 discloses a power measuring setup featuring a sensing part installed between the shoe and the locking cleat. The system comprises a sensing zone and an electronic package. The data is transmitted wirelessly and it is powered with a battery.
- Patent US 8762077 discloses a product comprising a pair of locking cleats that have force sensors wholly embedded in the cleats. The system uses a combination of piezoresistive sensors and accelerometers installed underneath the cleat.
- EP1586983 relates to a pointing device which can reduce its size and height, reduce leakage magnetic flux density to the outside, and has long product life and good usability. Magnetic sensors are disposed symmetrically two by two on X and Y axes on a printed circuit board. A silicone resin is placed on the printed circuit board, and an internally and externally unipolarly magnetized ring-like magnet is placed near the center of the magnetic sensors. The printed circuit board and silicone resin are not bonded. The silicone resin is easily deformed by applying external force, and returns to its initial state without the external force as soon as the external force is removed. The ring-like magnet is configured to move approximately in parallel to the surface of the printed circuit board. The variations in the ambient magnetic flux density produced by the movement of the ring-like magnet are detected by the magnetic sensors to output the coordinate values of the input point
- JP2010210461 relates to a force sensor which includes a position adjustment means for a magnetic sensor, the position of a magnetic circuit is adjustable relative to the magnetic sensor after assembly. In assembling a shaft and a housing with an elastic member put therebetween, the position of the magnetic sensor in the magnetic circuit is adjustable even if the assembly is performed with the magnetic circuit and the magnetic sensor displaced relative to each other owing to the displacement of the shaft relative to the housing caused by elastic deformation, etc. of the elastic member. Accordingly, the force sensor can be acquired which is reduced in variations of its output corresponding to sensitivity thereof or force applied thereto. Further, the force sensor can be acquired having a simple and small-sized structure with a reduced manufacturing cost since a permanent magnet dispensing with wiring is used in a magnetic field generator.

- EP1380927 relates to a pointing device which facilitates the assembly, achieves downsizing and has a long life. Magnetic sensors are placed symmetrically two by two along an X axis and Y axis on a printed circuit board. A switch is placed on a silicone resin side surface of the printed circuit board to provide a switch function achieved by depressing a magnet cover toward the magnet. The pointing device, a device for outputting coordinate values of an input point, can not only output the coordinate values, but also make a decision by the switch function. A silicone resin is easy to deform caused by an external force, and returns its initial state without the applied external force as soon as the external force is removed.

- GB2403296 relates to a sensor assembly for use in a vehicle seat for detecting the presence of an occupant comprises a first member defining an internal bore, a second member slidably disposed in the bore, a spring for biasing the second member relative to the first member, a magnet and a hall effect sensor. A plurality of such sensor assemblies may be mounted on a mat placed in the vehicle seat and the occupant is sensed as the magnet is urged towards the sensor thus generating a sensor signal. Each assembly on the mat may have springs with different spring constants or magnets with different strengths such that the mat response may be tuned.

- EP2186657 relates to a detection method for at least one of acting forces on a tire among a back-and-forth directional force, a lateral force, vertical force, and a moment about a tire axis, to be detect by strain outputs of strain sensors, which are attached on the tire and measure the strains of a sidewall portion. The above-mentioned strain sensors comprise first strain sensors that have a gain maximum line, in which the gain thereof becomes max, inclining to one side of the circumferential direction of the tire at an angle of 45 deg. with respect to the tire radial direction line, and second strain sensors that have the gain maximum line inclining to the other side of the circumferential direction of the tire at an angle of 45 deg. with respect to the tire radial direction line.; At least four pairs of sensors, in which one of the above-mentioned first strain sensors and one of the above-mentioned second strain sensors are made a pair, are arranged at regular intervals on the circumference line of one circle. The method comprises a strain measuring step to measure the strain of the sidewall portion with each of the above-mentioned strain sensors simultaneously at the rotational position P based on the tire rotational standard position X and to obtain the strain output per each strain sensor, and an acting force calculating step to calculate the above-mentioned force acting on tire based on the strain output per strain sensor obtained on this strain measuring step.

- US5325869 relates to an apparatus for load and displacement sensing adapted for measuring normal and shear forces exerted on load bearing portions of a body. The apparatus includes a deformable pad and a plurality of sensors. Each sensor includes at least one magnet and at least one Hall-effect transducer affixed to opposite sides of the deformable pad. Normal forces are measured utilizing magnets having a planar North and South polarizations and the magnitude and direction of shear forces are measured utilizing magnets having alternating North and South pole segments disposed longitudinally therewithin. In another embodiment, normal and shear forces are measured utilizing a magnet having a point-magnetization. The force exerted on the body deforms the pad, bringing the magnet in close proximity to the transducer, which senses the change in the magnetic flux density.

There is also interest to incorporate powermeters or force sensors for skiing. Hovever, there are no commercially available products that allow easy installation on the skis. Several studies have been conducted utilizing bench test devices to assess the dynamic response of the skies or binding elements. There have been no tests with direct force measurements while skiing yet. Most of the tests conducted involve often cumbersome arrangements installed between the ski and the ski binding. Despite the lack of products there are few companies producing devices to solve this issue.

- One of the most known systems consists of two devices that are installed on the ski shoes. The system works by compressing two air chambers inserted inside the shoes. An additional device linked with the air chambers produces a feedback sound that helps the athlete to correct his posture. Additional to the sound feedback the system is able via mobile phone apps to track most of the dynamic performance data.

- Another monitoring technology used to change the rigidity of the skis in accordance to the flexion of the ski itself. The system is based on a set of strain gauges, which are embedded during lamination inside the ski core. The data from the strain gauges is passed to an electronic unit, which processes it and uses the data to correct the torsional rigidity of the ski. The system is also used to damp unwanted vibrations and modes on the ski during a ride.

- A general-purpose force sensor is known in which a plate is used for a variety of applications including skiing. To be used on skis the plate is shaped to fit between the skis and the binding elements. The sensing principle of the plates is based on piezoelectric effect to determine the force exerted on the skis. The main disadvantage of this case is the added weight on the skis, which is critical especially for professional athletes. The system features a custom data acquisition system connected through cables to the sensor. The data can then be read with the use of a computer.

**EP 3 136 069 B1**

## SUMMARY

The presented invention can measure the force or torque applied by a participant in a sport, exercise, or game using a magnetic device. The invention describes the special arrangement of the magnetic device, which comprises at least one magnetic element, at least one magnetic field sensor, and at least one flexible element. This system exploits the interaction between magnetic bodies (e.g. permanent magnets) and magnetic field sensors (e.g. Hall sensors, magnetoresistive sensors, magnetic linear encoders, pick up coils) to provide a precise measurement of the power delivered by the user by monitoring the magnetic field change on the sensor(s). This type of sensor can be used in sports applications as a force-, torque- or powermeter. Performance monitoring with smart sensors is gaining popularity among both sports enthusiasts and professionals. These devices help the athletes to understand better their performances and to improve it.

To measure the change of magnetic field without the external disturbances a special arrangement between a group of magnetic sensors and magnetic bodies is used. Flexible elements are used to permit deformations on the device and allow formation of relative displacement between the magnetic field sensors and magnetic bodies when an external input, for example a force, is applied. The magnetic field generated by the magnetic element, is continuously monitored by the magnetic field sensors. When the relative position of the magnetic element changes, a change in the electrical output of the magnetic field sensors occurs. Analyzing this relative change in the magnetic field and the mechanical and thermal data of the device it is then possible to monitor the entire power transfer. The flexible element can be of different shapes and materials and it can be tailored to suit the desired displacement range depending on the application or user. Thermal data can be used to correct for the deformation with respect to the calibrated values under different ambient conditions.

The presented device is able to measure forces both normal and tangential to the symmetry axis of the device. Additionally, the device comprises a wireless module that allows the system to stream the data to an external device like an onboard computer or smart phone. The measurement device can feature a high capacity battery and/or an energy-harvesting device to extend the operating life of the system. Alternatively, it can be powered from a power supply mounted externally on any specialized outfit. The use of magnetism makes the system relatively immune to external disturbances. In addition to this factor the compact and simple assembly allow this device to be extremely robust and reliable. The system is completely sealed from the external environment, is water proof, and able to operate in harsh and dirty environments. The use of magnetic technology offers also the advantage of being cheap compared to the other technologies allowing the entire system to be much more cost effective.

According to the present invention there is provided a force sensor for measuring a force magnitude, and being suitable for use in a cycling cleat or ski binding according to claim 1, the force sensor comprising, one or more magnetic elements which exhibits a magnetic field; one or more magnetic sensors which can measure magnetic fields; flexible material which is located between the one or more magnetic elements one or more magnetic sensors so that the one or more magnetic elements are moveable with respect to the one or more magnetic sensors; a processor which can receive a value representative of magnetic field measured by a magnetic sensor, and to determine the distance which a magnetic element has moved with respect to the magnetic sensor based on said value representative of magnetic field and to determine the magnitude of force based on said determined distance.

The force sensor comprises a plurality of magnetic sensors symmetrically arranged around a longitudinal axis of the force sensor.

The force sensor further comprise a plurality of magnetic sensors which are arranged in a predefined position with respect to each other, and wherein the processor is configured to receive a value from each magnetic sensor representative of magnetic field measured by that magnetic sensor, and wherein the magnetic sensor is further configured to determine the direction of force based on values which is received from the plurality of magnetic sensors.

The force sensor further comprises an inner mount and an outer mount, and wherein the flexible material is arranged between the inner mount and outer mount and one or more magnetic sensors is attached to the outer mount, and wherein the inner mount and outer mount are each attached to the flexible material.

The inner mount comprises a hole which can receive a fastener which can fix the inner mount to a first object.

The hole is a through hole. For example the first object may be a cycling shoe, or a ski binding. The outer mount comprises an attachment means which is suitable for attaching the outer mount to a second object. For example the second object may be a cycling cleat, or a ski.

The force sensor may further comprise a fastener which is arranged to extend through the hole in the inner mount, and which fixes the inner mount to a first object; and wherein the outer mount further comprises a fixing means which fixes the outer mount to a second object, so that the first and second objects are mechanically connected via the force sensor.

Preferably the first and second objects can be arranged to mechanically cooperate with each other via the force sensor. For example the cycling cleat may be mechanically attached to a cycling shoe via the force sensor, by having the outer mount of the force sensor fixed to the cycling cleat using a fixing means (e.g. glue) and having the inner mount

4

attached to the cycling shoe by means of a fastener. For example the fastener may be a screw or nail which extends through a through hole in the inner mount and into a screw hole on the cycling shoe. Since the inner mount and outer mount are connected via the flexible material the cycling cleat will be connected to the cycling shoe via the force sensor which is connected to the cycling cleat at the outer mount and is connected to the shoe at the inner mount.

Likewise a ski binding may be mechanically attached to a ski via the force sensor, by having the outer mount of the force sensor fixed to the ski using a fixing means (e.g. glue), and having the inner mount attached to the ski binding by means of a fastener. For example the fastener may be a screw which extends into a screw hole on the ski binding and into a hole in the inner mount of the force sensor. Since the inner mount and outer mount are connected via the flexible material the ski biding will be connected to the ski via the force sensor which is connected to the ski at the outer mount and is connected to the ski binding at the inner mount.

The flexible material is configured to have a tubular shape and wherein the inner mount is located within the volume defined by the tubular flexible material.

The inner mount is arranged to protrude from volume defined by the tubular flexible material, so that the force sensor can measure the magnitude of force applied along a longitudinal axis of the force sensor.

The force sensor comprises a plurality of magnetic elements which are symmetrically arranged around a longitudinal axis of the force sensor.

Preferably the one or more magnetic elements are attached to the inner mount.

For example the one or more magnetic elements may be integral to the inner mount, or the one or more magnetic elements may be attached to an outer surface of the inner mount, such as being embedded in the outer surface of the inner mount.

In an embodiment the one or more magnetic sensors are attached to an inner surface of the outer mount, and the one or more magnetic elements are attached to an outer surface of the inner mount.

The processor may be configured to determine the distance which a magnetic element has moved with respect to the magnetic sensor based on said received value by using a first Look up table which comprises a plurality of predefined values representative of magnetic fields each of the plurality of predefined values being representative of a different magnetic field strength and a corresponding predetermined distance which a magnetic element has moved with respect to the magnetic sensor for each of predefined values representative of magnetic fields.

The processor may be configured to determine the magnitude of force based on said determined distance by using a second Look up table comprising plurality of predefined forces and a predetermined distance corresponding to each predefined force.

The force sensor may further comprise temperature sensors which measure temperature, and wherein the processor is further configured to compensate the value representative of magnetic field measured by a magnetic sensor for temperature changes.

Preferably the processor is further configured to modify the value representative of magnetic field measured by a magnetic sensor which it receives, based on the temperature measured by the temperature sensors, to provide a modified value, and to determine the distance which a magnetic element has moved with respect to the magnetic sensor based on the modified value, and to determine a force based on said determined distance.

According to an aspect of the present invention there is provided a cycling cleat for a cycling shoe comprising a force sensor according to any one of the above-mentioned force sensors, wherein the force sensor comprises, an inner mount and an outer mount, and wherein the flexible material is arranged between, and attached to both, the inner mount and outer mount, and wherein said one or more magnetic sensors is/are attached to the outer mount, wherein the inner mount is fixed to the cycling shoe by a fastener which is received into a hole in the inner mount, and wherein the outer mount is fixed to the cycling cleat by connecting means.

According to an aspect of the present invention ski and ski binding assembly, comprising a force sensor according to any one of the above-mentioned force sensors, wherein the force sensor comprises an inner mount and an outer mount, and wherein the flexible material is arranged between, and attached to both, the inner mount and outer mount, and wherein said one or more magnetic sensors is/are attached to the outer mount, wherein the inner mount is fixed to the ski binding by a fastener which is received into a hole in the inner mount, and wherein the outer mount is fixed to the ski by connecting means.

According to a further aspect of the present invention there is provided a skiing shoe, comprising a force sensor according to any one of the above-mentioned force sensors, wherein the force sensor comprises an inner mount and an outer mount, and wherein the flexible material is arranged between and attached to both, the inner mount and outer mount, and wherein said one or more magnetic sensors is/are attached to the outer mount, wherein the outer mount is fixed to the skiing shoe, and wherein the inner mount is connected to the ski binding by a locking mechanism.

According to a further aspect there is provided a method according to claim 8 for determining the magnitude of a force using the force sensor according to claim 1, the method comprising the steps of,

(a) applying a force, whose magnitude is to be determined, to cause a magnetic element to move with respect to a magnetic sensor,

(b) measuring magnetic field using the magnetic sensor,

(c) providing a processor with a value representative of magnetic field measured by the magnetic sensor,

(d) determining the distance which the magnetic element has moved with respect to the magnetic sensor based on the value,

(e) determining the magnitude of the force based on said determined distance.

## BRIEF DESCRIPTION OF THE DRAWINGS

**Figure 1** shows a perspective view of the force sensor according to an embodiment of the present invention for measuring a force magnitude;

**Figure 2** shows the exploded view of the force sensor shown in Figure 1;

**Figure 3** illustrates the force sensor of Figure 1 when a force is applied to the force sensor in a direction along the longitudinal axis of the force sensor;

**Figure 4** illustrates the force sensor of Figure 1 when a force is applied to the force sensor in a direction perpendicular to the longitudinal axis of the force sensor;

**Figure 5** illustrates the calibration process using calibrated weights by which Look up tables are generated;

**Figure 6** illustrates the calibration process using vertical displacement actuator by which Lookup tables are generated;.

**Figure 7** illustrates the calibration process using horizontal displacement actuator by which Look up tables are generated;

**Figure 8** provides a cross sectional view of a force sensor according to an example which is not part of the present invention;

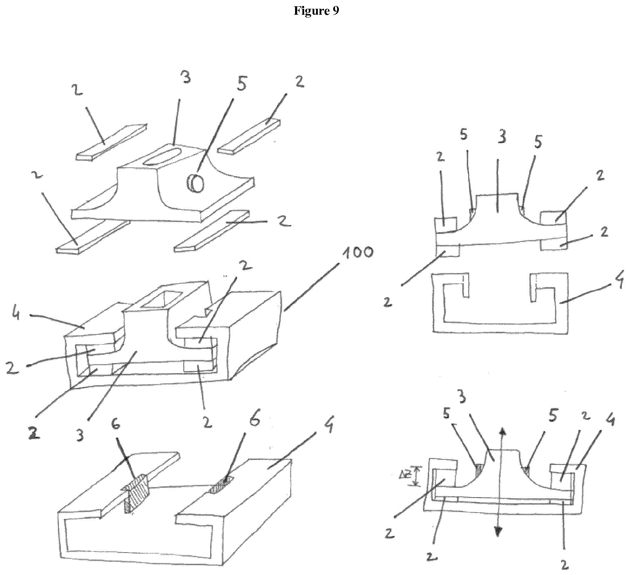

**Figure 9** provides cross sectional views of force sensors according to alternative examples which are not part of the present invention, where the flexible elements are rectangular shaped and the magnetic sensors are in a single integrated circuit package;

**Figures 10a,b** provide cross sectional views of force sensors according to alternative embodiments of the present invention, wherein the flexible material is defined by springs and frusto-conical shaped members respectively;

**Figure 11** shows a perspective view of a cycling cleat according to a further aspect of the present invention, having a plurality of force sensors of Figure 1;

**Figure 12a,b** shows the configuration when the force sensor is attached between the pedal and the shoe and the correlated displacement;

**Figure 13a,b,c** shows the system from the top when a pure vertical displacement is applied 13a, a pure horizontal displacement is applied 13b, and a force sensor installed inside the cleat 13c;

**Figure 14** shows the force sensor installed inside a ski biding of a cross country shoe;

## Detailed description of drawings

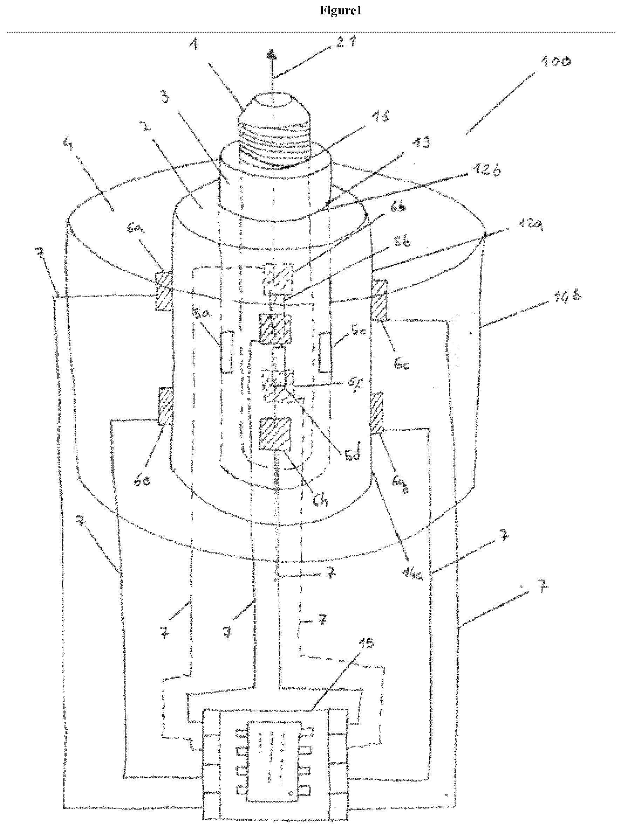

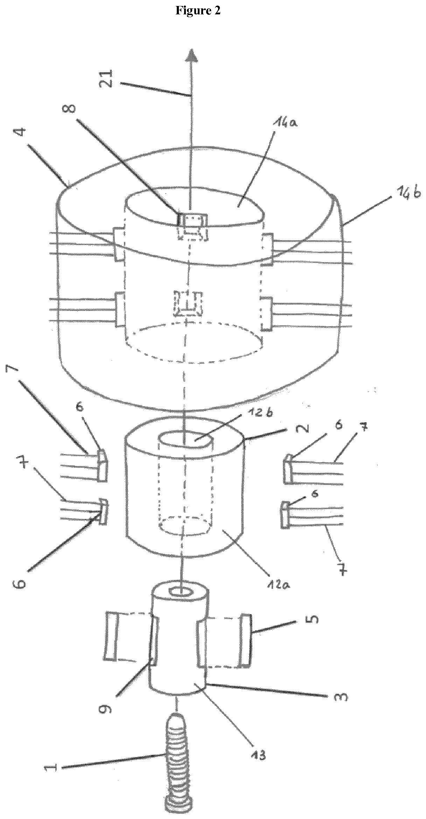

Figure 1 shows a perspective view of the force sensor 100 according to an embodiment of the present invention for measuring a force magnitude. Figure 2 shows an exploded view of the force sensor 100, with portions of the force sensor shown in dashed lines, for clarity.

The force sensor 100 is suitable for use in sports equipment and can be for example integrated into a cycling shoe and cleat assembly and/or a ski and ski binding assembly as will be described in more detail later. The force sensor 100 may also be integrated into a Nordic walking pole, a ball (such as a football), a running shoe, or any other piece of sports equipment to which a force is applied.

Referring to Figures 1 and 2, the force sensor 100 comprises, a tubular-shaped outer mount 4 and a tubular-shaped inner mount 3 which is arranged to extend within the tubular-shaped outer mount 4. The inner mount 3 has a length "L" which is longer than the length "K" of the outer mount 4 so that the inner mount 3 protrudes from the outer mount 4. The force sensor 100 can be used to measure forces in any direction; in particular, an advantage of providing an inner mount 3 which extends from the outer mount is that it enables the force sensor 100 to measure the magnitude of force applied along a longitudinal axis 21 of the force sensor 100. It should be understood that the present invention is not limited to using such an inner mount configuration, and it will be understood that other means may be adopted to enable the force sensor to measure the magnitude of force applied along a longitudinal axis 21 of the force sensor 100.

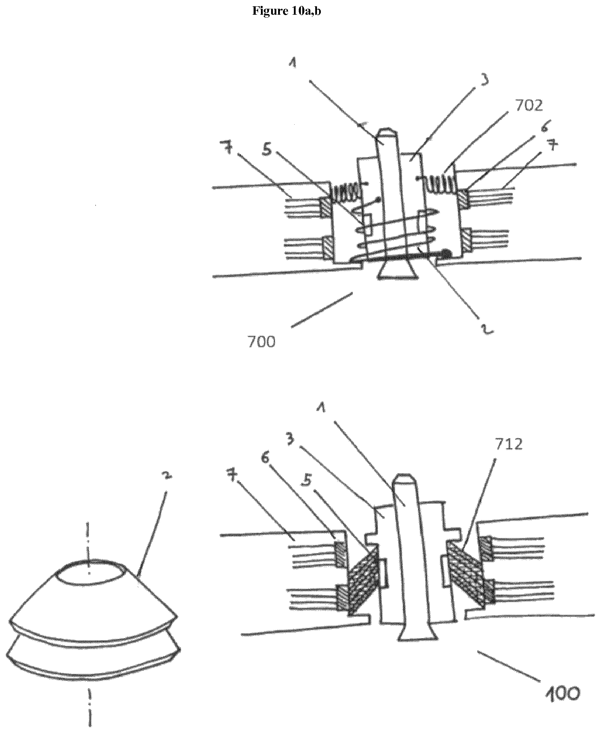

An intermediate component 2 is arranged between the inner mount 3 and outer mount 4. In this example illustrated in Figures 1 and 2 the intermediate component 2 is defined by flexible element 2. It should be understood that the intermediate component 2 may take any other suitable configuration; other possible examples for the intermediate component 2 are shown in Figures 10a&b and will be described in more detail later.

As shown in Figures 1 and 2 the flexible material 2 is tubular-shaped, and the inner mount 3 extends within the volume defined by the tubular-shaped flexible material 2; the length "T" of the tubular-shaped flexible material 2 is shorter than the length "L" of the inner mount 3 so that inner mount 3 protrudes from the tubular-shaped flexible material 2. Preferably the length "T" of the tubular-shaped flexible material 2 is equal to the length "K" of the outer mount 4.

An inner surface 14 of the outer mount 4 is attached to an outer surface 12a of the tubular-shaped flexible material 2, by a suitable attachment means such as glue or another type of adhesive, and/or by vulcanizing the flexible element to the surface of the inner and outer mount for example. An outer surface 13 of the inner mount 3 is attached to an inner surface 12b of the tubular-shaped flexible material 2, by a suitable attachment means such as glue or another type of adhesive or by vulcanizing the inner surface 12b of the flexible element while the inner mount 3 abuts the inner surface 12b. The flex in the flexible material 2 allows the inner mount 3 and outer mount 4 to move with respect to each other; preferably the flexible material 2 is configured to have a predefined Young's Modulus.

The force sensor 100 further comprises a plurality of magnetic elements 5 each of which exhibits a magnetic field. In the force sensor 100 four magnetic elements 5 are provided, however it will be understood that any suitable number of magnetic elements could be provided. The four magnetic elements 5 are attached to the outer surface 13 of the inner mount 3 and are arranged symmetrically around a longitudinal axis 21 of the force sensor 100. In this example the four magnetic elements 5 are embedded into the outer surface 13 of the inner mount 3.

A plurality of magnetic sensors 6 which can measure magnetic fields of the magnetic elements 5, are also provided. In the force sensor 100 eight magnetic sensors 6 are provided, however it will be understood that any suitable number of magnetic sensors 6 could be provided. It should be also understood that a plurality of magnetic sensors 6 can be packaged in one integrated circuit component and placed on the inner mount 14 of the outer mount 4. The eight magnetic sensors 6 are arranged as four pairs of magnetic sensors 6 arranged symmetrically around a longitudinal axis 21 of the force sensor 100. The eight magnetic sensors 6 are attached to an inner surface 14 of the outer mount 4. In this example the eight magnetic sensors 6 are embedded into an inner surface 14 of the outer mount 4. In this embodiment each pair of magnetic sensors 6 are located in a position corresponding to the position of a magnetic element. So for example, if the four magnetic elements 5 are located at 12 o'clock, 3 o'clock, 6 o'clock, and 9 o'clock positions then the four pairs of magnetic sensors 6 will be located at 12 o'clock, 3 o'clock, 6 o'clock, and 9 o'clock positions.

The magnetic sensors 6 are each operable connected (via wires 7 for example) to a processor 15 which can receive magnetic field measurements from the eight magnetic sensors 6. The processor 15 is configured to determine the distance which a magnetic element 5 has moved with respect to the magnetic sensor 6 based on said received magnetic field measurements and to determine the magnitude of force based on said determined distance. It should be understood that the magnetic sensors 6 can have some processing capabilities and they can send signals to the microprocessor, proportional to the magnetic field or the displacement of the magnetic elements 5.

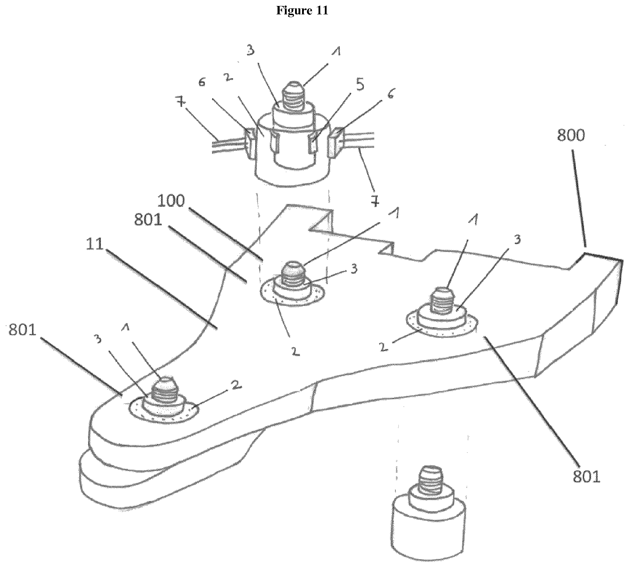

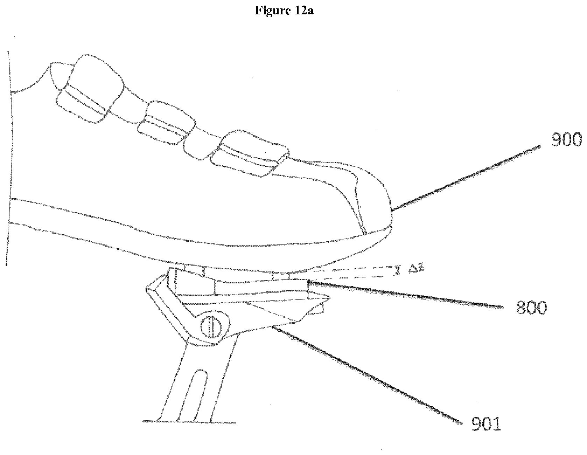

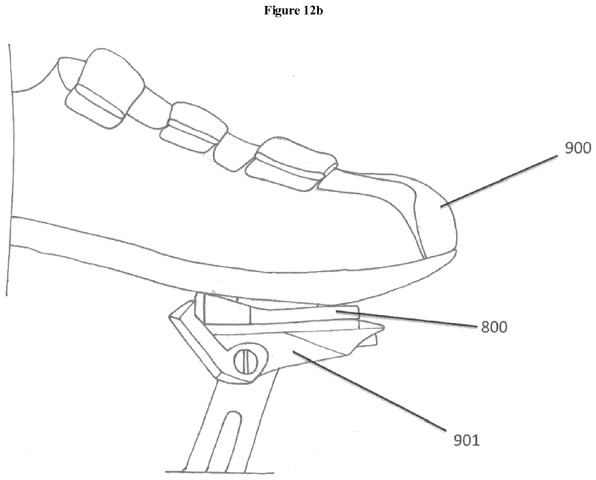

The inner mount 3 comprises a hole 16 defined therein which can receive a fastener 1 such as a screw 1. The hole 16 is a through hole and the fastener 1 can extend through the hole 16 to fix the inner mount 3 to a first object. The outer mount 4 may comprises an attachment means which is suitable for attaching the outer mount to a second object; for example a glue layer may be provided on an outer surface 14b of the outer mount 4 to adhere the outer mount 4 to the second object, in another example the outer mount 4 may be attached to the second object by vulcanizing the outer surface 14b of the outer mount 4 when the outer mount 4 is arranged to abut the second object. By fixing the inner mount 3 to a first object using the fastener 1, and attaching the outer mount 4 to the second object using the attachment means, the first and second objects are connected via the force sensor 100. For example Figure 11 shows a cycling cleat 800 and the outer mount 4 of a force sensor center is glued to cycling cleat 800 (second object) so as to attach the force sensor 100 to the cycling cleat 800; the fastener 1 which extends through the hole 16 in the inner mount 3 is then used to attached to the sole of a cycling shoe (first object), as shown in Figure 12, so that the cycling cleat 800 (second object) and cycling shoe (first object) are connected via the force sensor 100.

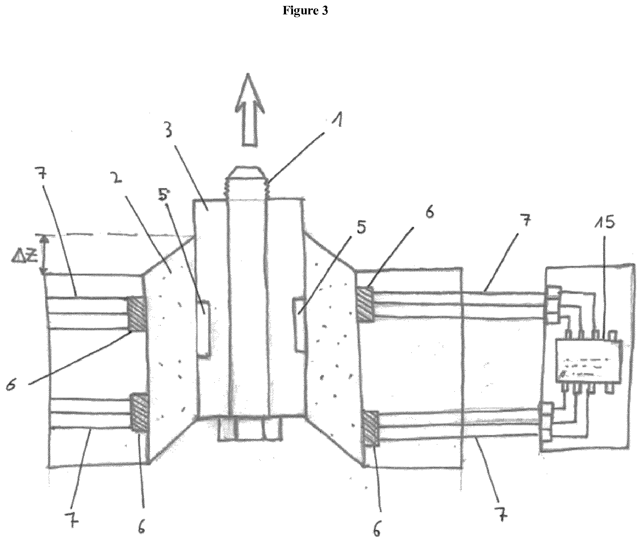

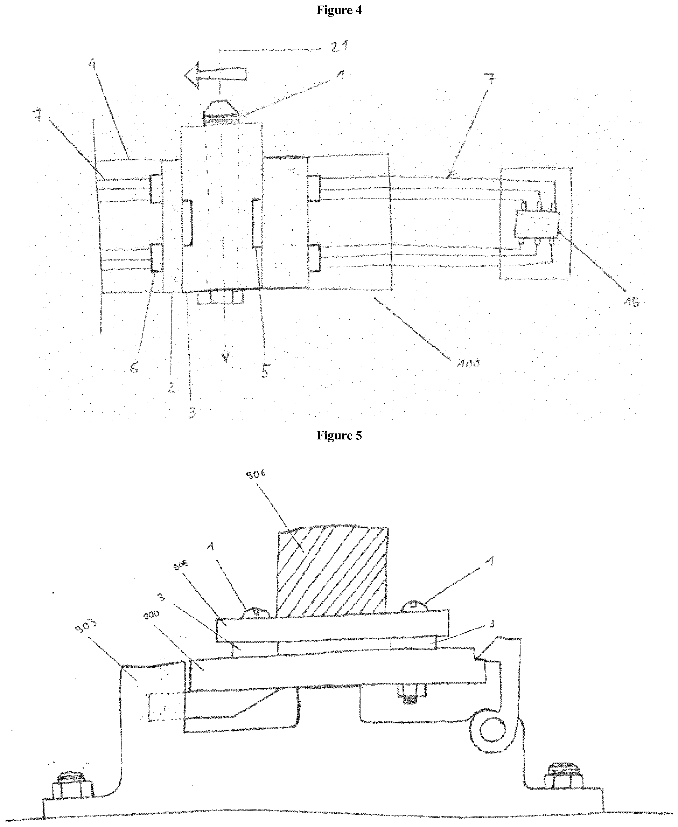

Figures 3 and 4 illustrate the force sensor 100 during use. The inner mount 3 of the force sensor is fixed to a first object (e.g. a sole of a cycling shoe) using the fastener 1; the outer mount is preferably pre-attached to a second object (e.g. a cycling cleat) so that the first and second objects are connected via the force sensor 100. Figure 3 illustrates the force sensor 100 being used to measure a force which is applied by a user to the first object, in a direction along the longitudinal axis 21 of the force sensor 100; and Figure 4 illustrates the force sensor 100 being used to measure a force which is applied by the user to the first object in a direction perpendicular to the longitudinal axis 21 of the force sensor 100.

Referring to Figure 3, the user applies a force to the first object, which causes the inner mount 3 to move a distance $\Delta z$, relative to the outer mount 4, along the longitudinal axis 21 of the force sensor 100. The flex of the flexible material 2 which connects the inner and outer mounts 3,4 allows the inner and outer mounts 3,4 to move relative to one another. Since the four magnetic elements 5 are attached to the outer surface 13 of the inner mount 3 and since the magnetic sensors 6 are attached to an inner surface 14 of the outer mount 4 the four magnetic elements 5 will be moved a distance $\Delta z$, relative to the magnetic sensors 6. The processor 15 can receive magnetic field measurements from the eight magnetic sensors 6 when the four magnetic elements 5 have been moved a distance $\Delta z$ relative to the magnetic sensors 6, and determine distance $\Delta z$ based on said received magnetic field measurements and subsequently determine the magnitude of force which the user has applied to the first object to cause the inner mount 3 to move a distance $\Delta z$, relative to the outer mount 4.

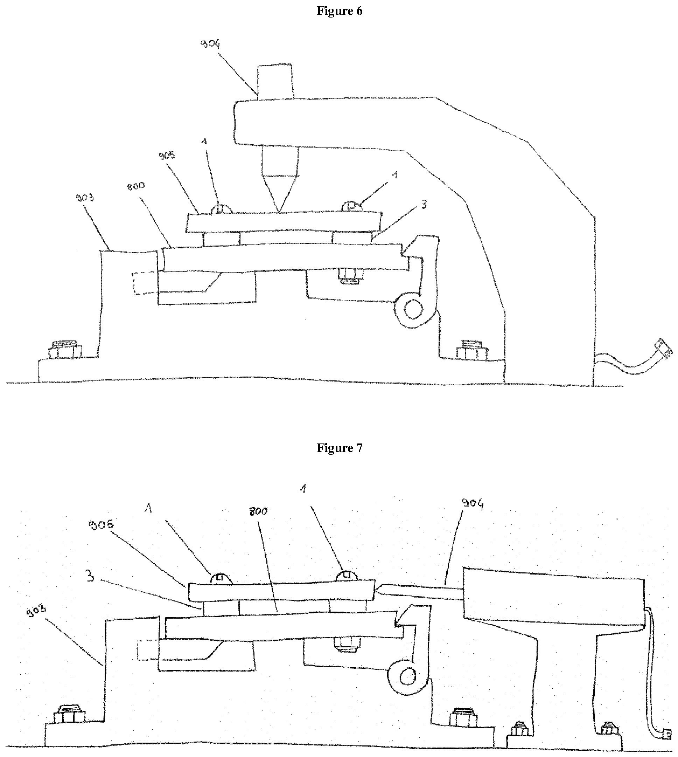

For example, consider that the user has applied a force to the first object which causes the inner mount 3 to move a distance $\Delta z$, relative to the outer mount 4, along the longitudinal axis 21 of the force sensor 100. Using magnetic field which is measured by the magnetic sensors 6 and predetermined first look-up table (e.g Table A) (which has been generated during a calibration process described later with respect to Figures 5,6,7), the force applied by the user to the first object in a direction parallel to the longitudinal axis 21, and the displacement of the magnetic elements 5 with respect to a respective magnetic sensor 6, can be determined. The first look-up table (Table A) shows the relationship between force applied to the intermediate component 2 (flexible material 2), magnetic field measured by a magnetic sensor, and vertical displacement of a magnetic element 5 with respect to a magnetic sensor 6 .

| Force [N] | Measured Magnetic Field [mT] | Measured Vertical Displacement [mm] |
|---|---|---|
| 50 | 200 | 0.1 |
| 150 | 170 | 0.3 |
| 200 | 160 | 0.4 |
| 350 | 130 | 0.5 |
| 400 | 90 | 0.6 |
| 600 | 50 | 0.8 |
| 850 | 20 | 1 |

Table A

For each of the eight magnetic sensors 6 the magnetic field measured by that magnetic sensor 6 is obtained by the processor 15; the processor 15 then obtains from the first look-up table the displacement value and force value corresponding to the measured magnetic field values.

In order to determine the force which the user has applied to the first object along the longitudinal axis 21, the force values obtained for each of the eight magnetic sensors 6 is summed end divided by the number of magnetic sensors 6.

In another example, the processor 15 may be configured to determine the magnitude of force based on displacement of the magnetic elements 5 with respect to respective magnetic sensors 6, and force applied to the user, by using a second Look up table, as will be described in more detail later.

Referring to Figure 4, the user applies a force to the first object which causes the inner mount 3 to move a distance $\Delta x$, relative to the outer mount 4, in a direction perpendicular to the longitudinal axis 21 of the force sensor 100.

The flex of the flexible material 2 which connects the inner and outer mounts 3,4 allows the inner and outer mounts 3,4 to move relative to one another. For the illustration purposes the four magnetic elements are labeled 5a-d and the eight magnetic sensors are labeled 6a-h.

Since the four magnetic elements 5a-d are attached to the outer surface 13 of the inner mount 3 and since the magnetic sensors 6a-d are attached to an inner surface 14 of the outer mount 4 the four magnetic elements 5a-d will be moved relative to the magnetic sensors 6a-h. Specifically the magnetic elements 5a-d will move a distance $\Delta$x away from the magnetic sensors 6b and 6c, The processor 15 can receive magnetic field measurements from the eight magnetic sensors 6a-h when the four magnetic elements 5a-d have moved relative to the magnetic sensors 6, and can determine the distance $\Delta$x based on said received magnetic field measurements and subsequently determine the magnitude of force which the user has applied to the first object to cause the inner mount 3 to move a distance $\Delta$x, relative to the outer mount 4.

For example, consider that the user has applied a force to the first object which causes the inner mount 3 to move a distance $\Delta$x, relative to the outer mount 4, in a direction which is perpendicular to the longitudinal axis 21 of the force sensor 100. Using the magnetic field which is measured by the magnetic sensors 6 and a predetermined second look-up table (Table B below for example) (which has been generated during a calibration process described later with respect to Figures 5,6,7), the force applied by the user in a direction perpendicular to the longitudinal axis 21 of the sensor and the displacement of the magnetic elements 5 with respect to a respective magnetic sensor 6 can be determined. The second look-up table (e.g Table B) shows the relationship between force applied to the intermediate component 2 (flexible material 2), magnetic field measured by a magnetic sensor, and horizontal displacement of a magnetic element 5 with respect to a magnetic sensor 6 .

| Force [N] | Measured Magnetic Field [mT] | Measured Horizontal Displacement [mm] |
|---|---|---|
| 50 | 200 | 0.1 |
| 150 | 170 | 0.3 |
| 200 | 160 | 0.4 |
| 350 | 130 | 0.5 |
| 400 | 90 | 0.6 |
| 600 | 50 | 0.8 |
| 850 | 20 | 1 |

Table B

For each of the eight magnetic sensors 6 the magnetic field measured by that magnetic sensor 6 is obtained by the processor 15; the processor 15 then obtains from the second look-up table the horizontal displacement value and force value corresponding to the measured magnetic field values.

In order to determine the vertical force which the user has applied to the first object parallel to the longitudinal axis 21, the force values obtained for each of the eight magnetic sensors 6 are summed and divided by the number of magnetic sensors 6

As there are eight magnetic sensors 6 distributed at different locations within the force sensor 100 (4 groups of two magnetic sensors placed symmetrically around the inner support 3) the movement of the inner mount 3 along the longitudinal axis 21 may be decoupled from the movement of the inner mount 3 perpendicular to the longitudinal axis 21, due to the geometrical arrangement of the magnetic sensors. Thus the force sensor 100 can be used to measure forces which have both vectors parallel and perpendicular to the longitudinal axis 21 of the force sensor.

In order to determine forces applied parallel to the longitudinal axis 21 of the force sensor 100, the processor 15 is configured to determine a force value, using the steps described with respect to Figure 3. Based on the magnetic field measurement from each of the magnetic sensors 6; the processor calculates an average of the eight force values used to determine the force applied parallel to the longitudinal axis 21.

In order to determine forces applied perpendicular to the longitudinal axis 21 of the force sensor 100, the processor 15 is configured to compute the difference between the readings of the different magnetic sensors facing each other inside a single force sensor. Based on the difference between the readings of the magnetic sensors facing each other, the processor calculates the respective displacement and force in the direction perpendicular to the longitudinal axis using the lookup table B. The sign of the difference determines the direction of the force and displacement. The look up table is generated during a calibration procedure as will be described in more detail later.

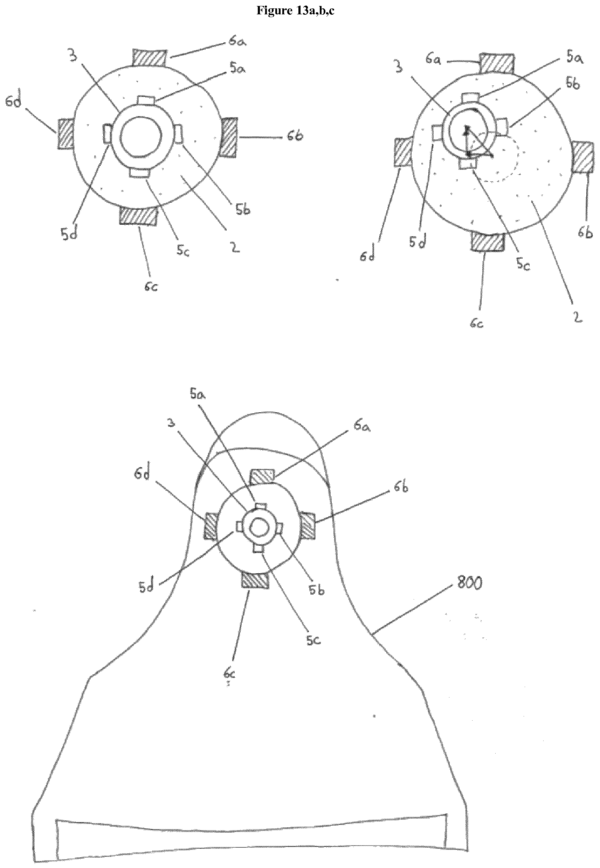

Figure 13a,b,c illustrate the force sensor 100 when a force which is exclusively parallel to the longitudinal axis 21 of the force sensor 100 is applied to the inner mount 3 (Figure 3).When no force is applied to force sensor 100 or if a force which is exclusively parallel to the longitudinal axis 21 of the force sensor 100 is applied to the force sensor 100, then each of the eight magnetic sensors 6 measure the same value.

In case of a pure vertical movement the magnetic sensors 6 will measure two different values. For example if the inner mount is moving toward the pedal, the four top magnetic sensors will measure a smaller magnetic field then the bottom four sensors due to the fact that the four magnets are closer to the four magnetic sensors at the bottom.

Figure 4 illustrate the force sensor 100 where a force which has a vector perpendicular to the longitudinal axis 21 of the force sensor 100 is applied to the inner mount 3 (It will be understood that the force applied may also include a vector which is parallel to the longitudinal axis 21 i.e. the force does not necessarily need to be exclusively perpendicular to the longitudinal axis 21 of the force sensor 100). When a force is applied to force sensor 100 which has a vector which is perpendicular to the longitudinal axis 21 of the force sensor 100 then the inner mount 3 (and thus the magnetic elements 5) will be moved closer to some of the eight magnetic sensors 6 and further form other others of the eight magnetic sensors 6. The magnetic sensors 6, to which, the inner mount 3 is moved closer to, will register an increase in magnetic field as the magnetic elements are moved closer to those magnetic sensors 6; the magnetic sensors 6 to which the which the inner mount 3 is moved further away from, will register a decrease in magnetic field as the magnetic elements are moved further from those magnetic sensors 6. In the example illustrated in Figure 10 a force which has a vector which is perpendicular to the longitudinal axis 21 is applied to the inner mount 3; so that magnetic sensor 6a measures 200 [mT], magnetic sensor 6b measures 5 [mT], magnetic sensor 6c measures 10 [mT], magnetic sensor 6d measures = 175 [mT].

Using a look up table (such as the look up table C below) which shows the relationship between force applied to the intermediate component 2 (flexible element 2), magnetic field measured by a magnetic sensor, and horizontal displacement of a magnetic element 5 with respect to a magnetic sensor 6, the magnitude of the force which is perpendicular to the longitudinal axis 21 can be determined.

| Applied Force [N] | Measured Magnetic Field [mT] | Measured Displacement [mm] |
|---|---|---|
| **200** | 200 | 0.5 |
| **170** | 170 | 0.4 |
| **130** | 160 | 0.35 |
| **110** | 130 | 0.20 |
| **90** | 90 | 0.15 |
| **60** | 50 | 0.1 |
| **30** | 20 | 0.05 |
| **15** | 10 | 0.025 |
| **5** | 5 | 0.010 |

Table C

The processor 15 is configured to perform the following steps:

A. identify the bigger magnetic measurement between the magnetic measurement of magnetic sensor 6a and the magnetic measurement of magnetic sensor 6c; in this example the magnetic measurement of magnetic sensor 6a is bigger with 200 [mT].

B: identify the bigger magnetic measurement between the magnetic measurement of magnetic sensor 6d and the magnetic measurement of magnetic sensor 6b; in this example the magnetic measurement of magnetic sensor 6d is bigger 175 [mT].

C. From each of these two identified biggest values the magnetic measurement measured by the remaining magnetic sensors are then subtracted resulting in: 200mT - 30mT =170 [mT] and 175mT -30mT = 145 [mT].

D. The processor 15 then retrieves the displacement values corresponding to each of these two values from the look up table (interpolation of the values in the look up table may be performed by the processor 15 if the exact values are not in the look up table). It should be noted that the lookup table is predefined and it is generated during a calibration process which an actuator applies a number of different known forces to the sensor 100. The force which is applied by the actuator and the corresponding displacement which the force sensor undergoes as the intermediate component 2 (flexible material 2) flexes under the applied force, are recorded to generate the look up table.

In this example the processor 15 determine from the look up table that the displacement value corresponding to 170 [mT] is 0.41 [mm] and that the displacement value corresponding to 145 [mT] is 0.275 [mm] indicating that the magnetic elements 5 moved 0.41 [mm] towards the magnetic sensor 6a and that the magnetic sensors 5 moved 0.275 [mm] towards the magnetic sensor 6d.

Knowing how the force sensor is aligned inside the cleat (Figure 13c) it is possible to determine the directions in which the forces are being applied. When the foot presses in a direction perpendicular to axis 21 the inner mount moves and the reading of the magnetic fields changes. By using the look up table generated during the calibration for the in plane movement (Table B) (perpendicular to axis 21), the displacement and the force are inferred.

It will be understood that although Figures 3 and 4 describe measuring forces applied exclusively in the directions along the longitudinal axis 21 of the force sensor 100 and perpendicular to the longitudinal axis 21 of the force sensor 100, the present invention can be used to measure forces applied in any direction (e.g. forces having vector components both parallel to and perpendicular to the longitudinal axis 21 of the force sensor) using the principles of the present invention. For example, the processor 15 may be configured to use two look-up tables to determine the force which has vectors both parallel to and perpendicular to the longitudinal axis 21 of the force sensor; in such an example a first look-up table is for determining the force vector along the longitudinal axis 21 and a second look up table is for determining the force vector perpendicular to the longitudinal axis 21. It should be understood that the magnetic fields readings from the magnetic sensors will change when there are both forces applied in the direction perpendicular and parallel to the longitudinal axis 21.

Also the force sensor may further comprise one or more temperature sensors which measure temperature. The temperature is used inside an Application specific integrated circuit (ASIC; which is a custom IC) to correct the magnetic field readings with respect to the temperature change in the ambient. In addition the temperature is also used to correct the force and displacement values as shown in the example. The one or more temperature sensor are preferably embedded inside the magnetic sensor. Also the one or more temperature sensors are preferably arranged to measure the temperature of the ambient.

The temperature sensors are operably connected to the processor 15 so that the processor 15 can receive temperature measurements made by the temperature sensors. The processor is further configured to take account of the temperature measurements when determining the force applied by the user; for example a plurality of look up tables may be provided, each for different temperatures, and the processor 15 may chose the appropriate look up table to use when determining the force applied by the user, based on the temperature measured by the temperature sensors. In another example the processor 15 may correct the magnetic field measurements received from the magnetic sensors 6 to take account of temperature.

In a further embodiment the processor 15 is configured to determine power. The steps performed by the processor 15 in order to determine power will now be described. It is noted that in the following example the processor 15 is configured to use two look-up tables to determine the force applied by the user, and takes account of temperature measured by temperature sensors provided in the force sensor:

STEP 1

Power is the product between the displacement speed and force, thus the first step involves determining the velocity ($V$) at which the inner mount 3 moves with respect to the outer mount 4. To compute the velocity ($V$) the time ($t_1$) at which the inner mount 3 begins to move and the time ($t_2$) at which the inner mount 3 stops to move, and the distance , $\Delta d$ which the inner mount moves are used to calculate the velocity ($V$) as follows.

$$V = \Delta d/(t_2 - t_1)$$

If the displacement of the inner mount 3 starts to change by an amount greater than or equal to a predefined first displacement threshold, this initiates the system to start saving measured data. The microcontroller is constantly getting readings from the sensors, but the readings are only processed if they are above a certain threshold.

The time ($t_2$) at which the inner mount 3 stops to move is also determined by the amount of displacement of the inner mount 3. The time ($t_2$) is the time at which displacement of the inner mount 3 is lower than or equal to a second predefined displacement threshold. When the displacement of the inner mount 3 is lower than or equal to a second predefined displacement threshold the system is considered to be at rest. The first and second threshold values are chosen during the calibration steps in order to reject noise coming from the sensor, that would disturb the measurements.

The distance, $\Delta d$ which the inner mount 3 moves is determined via the lookup table generated during the calibration.

For example:

$$\Delta d \text{ measured} = 0.8 \text{ [mm]}$$

$$t_2\text{-}t_1 = 1 \text{ [s]}$$

$$V = 0.8[mm]/1[s] = 0.8 [mm/s]$$

If for example the force sensor 100 was to be used in a cycling shoe and cycling cleat assembly then the velocity (*V*) is calculate each time the pedal is pushed and another one each time the pedal is pulled.

STEP 2

After having determined the velocity (V), the force applied by the user to the inner mount is determined.

To determine the force the magnetic field measured by each of the eight magnetic sensors 6 is sent to the processor 15. For each magnetic field measurement the processor then checks a predefined look-up table to determine a force value corresponding to that magnetic field measurement. The predefined look up table which the processor 15 checks shows the relationship between force applied to the sensor 100, magnetic field measured by a magnetic sensor, and displacement of a magnetic element 5 with respect to a magnetic sensor 6.

| Force [N] | Measured Magnetic Field [mT] | Measured Displacement [mm] |
|---|---|---|
| 50 | 200 | 0.1 |
| 150 | 170 | 0.3 |
| 200 | 160 | 0.4 |
| 350 | 130 | 0.5 |
| 400 | 90 | 0.6 |
| 600 | 50 | 0.8 |
| 850 | 20 | 1 |

Table D

The processor 15 checks the lookup table to find the force value corresponding to the magnetic field measurement which it received form a respective magnetic sensor 6, in order to determine the force applied by the user.

The processor 15 can interpolate between the values given in the look up table if the measured magnetic field value is not provided in the look up table, in order to determine the force applied. For example if the magnetic sensor 6 measures a magnetic field of 150 [mT] then it is possible to interpolate as follows in order to determine a force corresponding to 150 [mT]:

$$F = 200 + (350 - 200) * \frac{150-160}{130-160} = 250 \text{ [N]}$$

It should be noted that the predefined look-up table is generated in a calibration procedure in which an actuator applies a number of different known forces to the sensor 100, and the force which is applied by the actuator and the corresponding displacement which the actuator undergoes as the intermediate component 2 (flexible material 2) flexes under the applied force, are recorded.

Because the mechanical properties are temperature dependent, different lookup tables are provided for different temperatures. The different look up tables are generated by carrying out the calibration process at different temperatures.

For example a first look up table for a temperature of 25°C may be:

Table E

| Applied Load [N] | Measured Magnetic Field [mT] | Measured Displacement [mm] |
|---|---|---|
| 50 | 200 | 0.1 |
| 150 | 170 | 0.3 |
| 200 | 160 | 0.4 |
| 350 | 130 | 0.5 |
| 400 | 90 | 0.6 |
| 600 | 50 | 0.8 |
| 850 | 20 | 1 |

A second look up table for 35 °C may be:

| Applied Load [N] | Measured Magnetic Field [mT] | Measured Displacement [mm] |
|---|---|---|
| 50 | 185 | 0.12 |
| 150 | 160 | 0.41 |
| 200 | 145 | 0.59 |
| 350 | 115 | 0.70 |
| 400 | 70 | 0.89 |
| 600 | 35 | 0.98 |
| 850 | 8 | 1.2 |

Table F

The force sensor 100 further comprises one or more temperature sensors and the processor 15 is configured to receive temperature measurements from those one or more temperature sensors. Based on the temperature measurements, processor 15 then selects the appropriate look up table to use to determine the force. For example if the temperature sensor sense a temperature of 25°C then the processor 15 will select to use the first look up table in order to determine the force applied by the user; likewise if the temperature sensor senses a temperature of 35°C then the processor 15 will select to use the second look up table, in order to determine the force applied by the user.

Interpolation may be used to take account of temperatures for which there is no specific look up table. For example a magnetic sensor 6 may measure 170 [mT] and the one or more temperature senor may measure temperature of 30 C°, to get the force acting on it a double interpolation is necessary:

First the force is found out from the table at 25 C°, the corresponding force is 150 N.

For the second table it is necessary to interpolate:

$$F = 50 + (150 - 50) * \frac{170 - 160}{185 - 160} = 90[N]$$

After the force interpolation is necessary to interpolate for the temperature.

$$F = 90 + (150 - 90) * \frac{30 - 25}{35 - 25} = 120[N]$$

This is then the resulting force for a temperature of 30 C° and 170 mT for the magnetic readings.

STEP 3

Next power is calculated by the processor 15.

To compute the power the processor multiplies the force (determined in step 2) with the velocity (computed in step 1), this results in:

$$P = F * V = 0.0816 \, [W]$$

Further more the processor 15 may be configured to compute energy used by the user to apply the force. The energy is computed as follows:

$$E = F * \Delta d$$

Where E is the energy in joule, F is the force in newton and $\Delta d$ is the total displacement for that measure in meters. For example if:

Measured force F = 200 [N],
Related displacement $\Delta S$ = 0.4 [mm] = 0.0004 [m]

The energy is calculated as:

$$E = 200 * 0.0004 = 0.08\,[J]$$

If the present invention is used in a cycling shoe and cycling cleat assembly then all of the above calculations may be performed each time the user performs a cycling stroke to determine the force applied, power and energy expended by the user on each cycle stroke. The processor may further be configured to sum up all the computed energies calculated for each of a plurality of cycle strokes made by the user, and divide by the time used to perform a cycling stroke so as to get an average energy expenditure by the user pro turn. Typically every pedal turn the user does at least two strokes (one per foot). Energy is computed using the above-mentioned method predefined time interval (e.g 100ms) and summed up over the entire pedal stroke to get the total energy in one pedal turn. The values of every pedal turn are then summed up to get the total energy expended over all pedal strokes taken during the whole distance cycled by the user.

It will be understood that the magnetic sensor of the present invention may also be used to measure the direction of the force applied by the user. The magnetic elements 5 and magnetic sensors 6 are arranged in a predefined position in the force sensor. When the user applies a force and the processor 15 receives a measurement of magnetic field from each magnetic sensors. If a magnetic sensor measures a decrease in magnetic field, the processor determines that a respective magnetic element which was opposite to that magnetic sensor has been moved in a direction away from the magnetic sensor; likewise if magnetic sensor measures an increase in magnetic field, the processor determines that a respective magnetic element which was opposite to that magnetic sensor has been moved in a direction towards that magnetic sensor. Based on the predefined position which the magnetic elements 5 and magnetic sensors 6 occupy in the force sensor, and based on whether a respective magnetic sensor 6 measures an increase or decrease in magnetic field, the processor 15 can determine the direction of the force applied to the sensor 100 by the user, and thus determine the direction of the force applied by the user to the first object.

In a further embodiment a plurality of force sensors are used determine force, power and/or energy. For example Figure 11 shows the cycling cleat 800 which is provided with a plurality of holes 801 each of which comprises a force sensor 100 positioned therein. Each of the steps 1-3 described above may be performed for each of the force sensors 100a-c so that a force, power and energy value may be determined from each force sensor 100a-c individually.

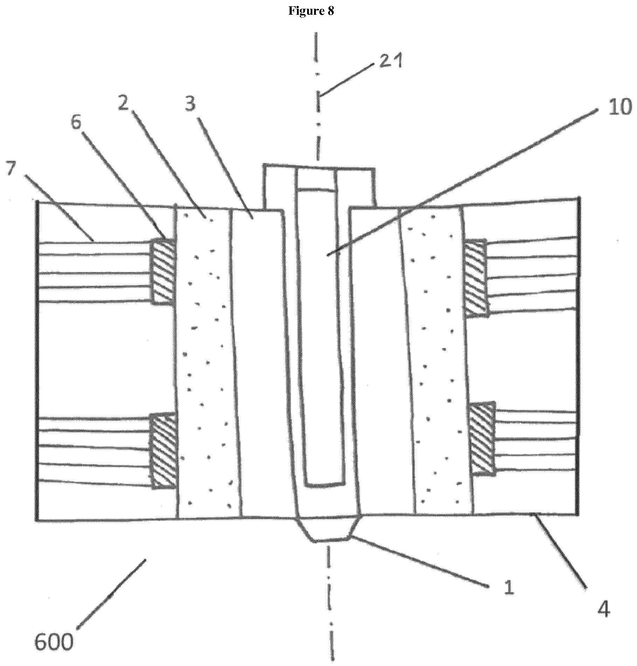

Referring to Figure 8, each of the force sensor 100a-c is configured to have a cylindrical shape and is snug fitted into a cylindrical hole 801 with dimensions corresponding to the dimensions of the force sensor 100a-c. The force sensor 100a-c may be fixed in the hole 801a by means of glue or any other suitable attachment means. In another embodiment there is provided on the cycling cleat 800 and/or on the force sensor 100a-c a means for removable connecting the force sensor 100a-c to the cycling cleat 800, for example the cycling cleat 800 and/or on the force sensor 100a-c may comprise a snap-fit connecting means to enable the force sensor 100a-c to be selectively snap-fitted to the cycling cleat 800. Providing a means for removable connecting the force sensor 100a-c to the cycling cleat 800 allows the force sensor 100a-c to be removed from worn cycling cleats and to be connected with new cycling cleats.

As shown in Figure 11 the cycling cleat 800 may be provided with a plurality of holes 801 each of which comprises a respective force sensor 100a-c positioned therein. The location of the plurality of holes 801 correspond to the location of screw holes provided on the sole a cycling shoe to which the cycling cleat 800 is to be attached; specifically the location of the plurality of holes 801 are such that when a force sensor 100a-c is provided in each hole, the holes 13 in the inner mount 3 of all the force sensors 100a-c can be aligned with a respective screw hole provided on the sole of a cycling shoe. This allows the respective fasteners 1 of the force sensors 100a-c to be used to secure the cycling cleat 800 to the cycling shoe. Figures 12 ,13 show the cycling cleat 800 attached to the sole of a cycling shoe 900; the cycling cleat 800 is shown to be clicked into a pedal 901.

Although Figure 11 shows the cycling cleat 800 comprising a plurality of holes 801 each of which comprises a force sensor 100a-c positioned therein, it should be understood however that for the present invention a single hole 801 in the cleat 800 comprising a single force sensor 100 is sufficient for the present invention. Providing a plurality force sensors 100a-c advantageously enables more accurate measurement of force. Due to the 3D measure capabilities of one single force sensor 100, one single force sensor 100 is sufficient to enable measurement of the force applied by the cyclist. By providing a plurality of force sensors 100a-c it is possible to characterize how the user's foot presses on the pedal. Using a plurality of force sensors 100a-c it is possible to detect the tilting and rolling angle of the foot when it is pressing down In addition to that the force distribution can be also measured by controlling how much of the overall force is sensed from every sensor.

Referring to Figures 11,12 and 13, each of the plurality of force sensors are used to determine a force applied by the user to the inner mount 3 of each force sensor 100a-c (the user applies a force to the cycling shoe with their foot; which is transmitted to the cycling cleat and to the cycling pedal when the user performs a cycling stroke). Due to the user's foot placement, force measurements determined from each of the force sensors 100a-c are not equal. By relating the measured force to the sum of all the measured forces it is possible to derive the tilting, rolling and yawing angles of the users foot.

In order to determine a force measurement for each of the respective force sensors 100a-c the same procedure as described in STEP 2 above is performed by the processor 15 for each force sensor 100a-c. As a numerical example assume that

Force sensor 100a measurement: 50[N]
Force sensor 100b measurement: 100[N]
Force sensor 100c measurement: 150[N]

These are three independent measured forces from the three force sensors 100a-c.
The processor 15 can then determine a total force applied by the user by summing the force measurements of each of the forces sensors 100a-c.

$$F_{tot} = F_{front} + F_{left} + F_{right} = 50\ [\text{N}] + 150\ [\text{N}] + 100\ [\text{N}] = 300\ [\text{N}]$$

The processor 15 can determine total energy expended by the user in applying the force by multiplying the total Force ($F_{tot}$) with displacement value in the look up table corresponding to the magnetic field measured by the magnetic sensor. The displacement used for the calculation is the one that is related with the current measured magnetic field and is read from the column of the displacements in the lookup table. The energy calculation becomes:

$$E_{tot} = E_{front} + E_{left} + E_{right} = 50\ [\text{N}] * 0.1\ [\text{mm}] + 150\ [\text{N}] * 0.3\ [\text{mm}] + 100\ [\text{N}] * 0.2\ [\text{mm}] = 0.07\ [\text{J}]$$

The processor 15 is configured to determine the user's foot orientation by the relative displacement between the force sensors 100a-c. The inner mount can move with respect to the outer mount in vertical and horizontal direction due to the flexible element connecting the two. In addition depending on how the foot is pressed down with respect to the cleat the positions between the three inner mounts can be different with respect to each other. Meaning that the inner mounts of each of the different force sensors 100a-c do not have all the same position with respect to the outer mount of their respective sensors 100a-c. The relative displacements are derived from the absolute displacements measured by the force sensors. Each force sensor determines an absolute displacement using the magnetic values measured by the magnetic sensors and finding the corresponding displacement in the look up table; the corresponding displacement read from the look-up table corresponds to the absolute displacement. The processor 15 calculates the relative displacements by taking the difference between the various absolute displacements.
Absolute displacement measured by the force sensor 100a: 0.1 [mm]
Absolute displacement measured by the force sensor 100b: 0.3 [mm]
Absolute displacement measured by the force sensor 100c: 0.2 [mm]
The relative displacement is derived by the processor 15 in the following way:

Relative displacement between left and right: 0.3 [mm] - 0.2 [mm] = 0.1 [mm]
Relative displacement between front and back: (0.3 [mm] + 0.2 [mm])/2 - 0.1 [mm]= 0.15 [mm]

As can be seen in the previous equation, to derive the relative displacement between the force sensor 100a and the force sensor 100b and force sensor 100c, an average value is calculated by the processor 15.
Using the physical distances between the three force sensors 100a-c and trigonometry the processor 15 derives the roll and tilt angle of the foot:

The forces sensors 100b and 100c are physically 35 [mm] apart from each other on the cleat.
The force sensor 100a is 28 [mm] apart from the line connecting the forces sensors 100b and 100c.

The processor 15 derives the roll and tilt angle of the foot using trigonometry as follows:

$$\text{Tilt angle} = \text{atan(relative displacement / geometrical distance)} = \text{atan } (0.15[\text{mm}] / 28 \text{ [mm]})= 0.3069°$$

$$\text{Roll angle} = \text{atan(relative displacement / geometrical distance)} = \text{atan } (0.1[\text{mm}] / 35 \text{ [mm]})= 0.1679°$$

To determine in which direction the user's foot is tilted the sign in front of the relative displacement is checked by the processor 15. If the sign is positive the processor 15 determines that the user's foot is tilted clock wise with respect to the symmetry axis of the cleat. If the sign is negative the processor 15 determines that the user's foot is tilted anticlockwise with respect to the symmetry axis of the cleat. The symmetry line is the line that divides the top view of the cleat in two equal parts from 12 o clock to 6 o clock.

In addition to the angles, the ratios between the total applied force and the single measured forces by each sensor show how the force is distributed over the cleat when the user's applies force to the pedal during a cycling stroke:

$$\text{Percentage force applied by user's foot the force sensor 100a} = 50 \text{ [N]}/300 \text{ [N] * } 100 = 16.6\%$$

$$\text{Percentage force applied by user's foot the force sensor 100b} = 150 \text{ [N]}/300 \text{ [N] * } 100 = 50\%$$

$$\text{Percentage force applied by user's foot the force sensor 100c} = 100 \text{ [N]}/300 \text{ [N] * } 100 = 33.4\%$$

The calibration process by which the first and second look up tables are generated is illustrated in Figures 5,6 and 7 the calibration process involves using a set of different weights pushing on the inner mount 3. One at a time a known weight 906 is applied to the inner 3 mount and the magnetic readings of the sensor are saved. The procedure is done for 20 different weights 906 over all operating range. With the twenty points a relation between force and magnetic field is generated by fitting a polynomial to the points. For the displacement the inner mount 3 is pushed with an actuator 904 set to different displacement and the magnetic field is again measured. From the data collected another polynomial is fitted to the get a relation between displacement and magnetic field.

**Calibration to generate the lookup tables.**

Step 1: The cleat 800 as shown in Figure 11 comprising the three force sensors 100a-c is installed in a mount 903 that features the same attachment system as a bicycle pedal.
Step 2: A microcontroller 15 and the magnetic sensors 6 are started by connecting them to the battery.
Step 3: Wireless communication is established between the microcontroller 15 and an external computer. The computer will log all the data transmitted by the microcontroller 15.
Step 4: A set of traceable calibrated weights 906 is used These weights are cubes of various dimensions and weight, which spans from 100 gr up to 100 kg, The mass of the cubes is measured with a certified and calibrated scale.
Step 5: A support plate 905 is connected to the three inner mounts 3 of the respective force sensors 100a-c using a set of screws 1. The plate 905 is used as base for laying the weights.
Step 6: One weight 906 is placed on the center of the plate 905 and the values of the magnetic field are recorded by the microcontroller 15, sent to the computer and saved. The data is recorded until the values of the measured magnetic fields reach stationary values. This step is repeated five times for every weight 906. Every measurement is saved with the corresponding applied weight 906.

**Calibration for displacement lookup table.**

Step 1: The cleat 800 as shown in Figure 8 comprising the three force sensors 100a-c is installed in a mount 903 that features the same attachment system as a bicycle pedal.

Step 2: A microcontroller 15 and the magnetic sensors 6 are started by connecting them to the battery.

Step 3: Wireless communication is established between the microcontroller 15 and an external computer. The computer will log all the data transmitted by the microcontroller 15.

Step 4: A support plate 905 is connected to the three inner mounts 3 of the respective force sensors 100a-c.

Step 5: The tip of an actuator 904 with selectable displacement is bolted in the center of the support plate 905. The other end of the actuator is fixed to an immovable base support.

Step 6: The tip of the actuator 906 is displaced to apply a load to the support plate 905 which, applies a load to the inner mounts 3 of the respective force sensors 100a-c; to increase the load applied, the tip of the actuator is displaced further in a direction towards the support plate; the displacement of the actuator is set via computer.

Step 7: A precise actuator 906 displacement is set and the actuator starts to push or pull on the support plate 905 until the tip reaches the desired displacement.

After the tip reaches the desired displacement, the displacement value is recorded; the magnetic field measured by each of the magnetic sensors in the force sensors is also recorded (the data of the magnetic field is transmitted from the microcontroller to the computer and stored together with the displacement value). The procedure is repeated with different actuator displacements. A commercial force sensor can also be attached to the tip of the displacement sensor for additional force feedback.

**Generation of the look up tables.**

To generate the lookup table for the different forces and displacements the values measured in the two previous procedures are used.

To generate the lookup table for the vertical displacement the procedure is as follows.

Step 1: The magnetic readout for the vertical axis of the group of magnetic sensor belonging to the same outer mount 4 are used to compute and average values of the magnetic field. The average value is computed by summing up all the magnetic values and then dividing it by the number of sensors.

Step 2: The computed average is directly related to the measured force and displacement.

Step 3: Step2 is repeated for every measured force and displacement until the look up table is fully populated.

For the magnetic measurements perpendicular to the symmetry axis 21, the difference of the magnetic field measurements between sensors facing each other are computed, by subtracting the two value from each other.

Step 1: The values of the measured magnetic fields, associated with the sensors lying in front of each other on the outer mount, are used to build the difference between the measured values.

Step 2: Using the sign of the value the direction of motion is detected. If the sign is negative the inner mount 3 is moving towards 6 o'clock for the sensors aligned to the cleat symmetry axis and toward 3 o'clock for the sensors aligned perpendicular to the cleat symmetry axis. If the sign is positive the inner mount 3 is moving towards 12 o'clock for the sensors aligned to the cleat symmetry axis and towards 9 o'clock for the sensors aligned perpendicular to the cleat symmetry axis.

Step 3: The magnitudes of the measurements, are associated to the measured displacement and measured force.

Step4: Step 3 is repeated for all the measured magnetic values until the lookup table is fully populated.

Figure 8 provides a cross sectional view of a force sensor 600 according to an example which is not part of the present invention. The force sensor 600 shown in Figure 8 has many of the same features as the force sensor 100 shown in Figures 1 and 2 and like features are marked with same reference numbers. However the force sensor 600 comprises a single magnetic element 5. The single magnetic element 5 is defined by a magnetic fastener 1 which is placed into a hole in the inner mount and which is useable to fix the inner mount to a first object.

Figures 10a,b provide cross sectional views of force sensors 700a, 700b according to alternative embodiments of the present invention. The force sensors 700a, 700b have many of the same features as the force sensor 100 shown in Figures 1-4 and like features are marked with same reference numbers. However in the force sensor 700a illustrated in Figure 10a the flexible material 2 is defined by springs 702. In the force sensor 700b the flexible material 2 is defined by one or more frusto-conical shaped members which comprise elastic material. The number of frusto-conical shaped members which are provided might be selected to achieve any predefined Young's modulus for the flexible material.

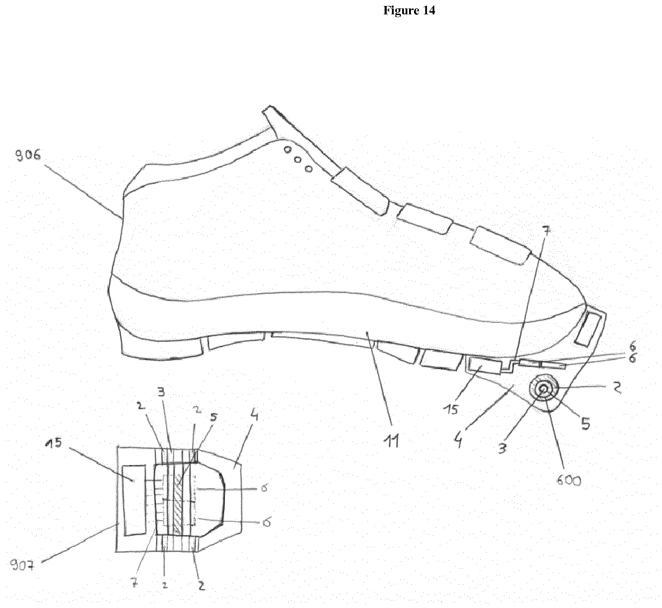

**Figure 14** shows the force sensor 600 installed inside a ski binding of a cross country shoe 906. The force sensor 600 is installed in the front part of the sole 11 of the shoe 906. The inner mount 3 connects the shoe to the cross country sky. The inner mount 3 has a magnetic element 5 inside and the inner mount 3 is surrounded by the flexible element 2. The flexible element 2 has the inner surface 12b fixed to the outer surface of the inner mount 13 and the outer surface 12 fixed to the inner surface of the outer mount 14. A set of magnetic sensors 6 is placed inside the outer mount 4 on the top of the inner mount 3. The magnetic sensors 6 are connected via wiring 7 to the microcontroller 15 inside the sole 11. As the skier pushes on the shoe 906 the flexible element 2 deforms forcing the inner mount 3 to move with respect to the outer mount 4 and with respect to the magnetic sensors 6. As the inner mount 3 moves the magnetic field readings of the magnetic sensors 6 changes and the force and displacement are computed using the look up table described previously.

## List of Parts

1. Fastener
2. Flexible elements/ Intermediate components
3. Inner mount
4. Outer mount
5. Magnetic element (a-d)
6. Magnetic sensor (a-h)
7. Wiring/Wires
8. Sensor slot
9. Magnet body slot
10. Screw with embedded magnet
11. Sole
12a. Outer surface of tubular shaped flexible material
12b. Inner surface of tubular shaped flexible material
12c. Outer surface of outer mount
13. Outer surface inner mount
14. Inner surface of outer mount
15. Microcontroller/ processor
16. Hole in force sensor
21. Longitudinal axis
100a-c. Force sensor
600. Force sensor with one magnetic element
700 a-b. Force sensor with spring or conical elements
701. Conical shaped springs
702. Springs
800. Cleat
801a-c Plurality of holes
900. Shoes
901. Cycling pedal
902. Crank arm
903. Fixing base with pedal like attachment
904. Displacement actuator
905. Force distribution plate
906. Cross-country shoe
907. Force sensor bottom view

## Claims

1. A force sensor (100) for measuring a force magnitude, and being suitable for use in a cycling cleat (800) or a ski binding, the force sensor (100) comprising,
a plurality of magnetic elements (5) which exhibits a magnetic field symmetrically arranged around a longitudinal axis (21) of the force sensor (100);

a plurality of magnetic sensors (6) which can measure magnetic field symmetrically arranged around the longitudinal axis (21) of the force sensor (100), and wherein the plurality of magnetic sensors (6) are located in a position corresponding to the position of the magnetic elements (5);

one or more flexible material (2) which is located between said magnetic elements and said magnetic sensors so that the one or more magnetic elements are moveable with respect to the one or more magnetic sensors, wherein,

said plurality of magnetic elements (5) are provided on an outer mount (4), and said plurality of magnetic sensors (6) are provided on an inner mount (3), or, said plurality of magnetic elements (5) are provided on an inner mount (3), and said plurality of magnetic sensors (6) are provided on an outer mount (4); and

wherein the inner mount (3) is arranged to extend within the outer mount (4), and wherein the inner mount (3) protrudes from the outer mount (4), and wherein said flexible material (2) is located between the inner and outer mount (3,4) and is fixed to both the inner and outer mounts (3,4); and

wherein the inner mount (3) further comprises a through-hole (16) defined therein, which extends parallel to the longitudinal axis of the force sensor, and which can receive a fastener (1) which can be used to secure the inner mount (3) to a cycling shoe or ski; and

wherein the force sensor further comprises, a processor (15) which can receive from each of the plurality of magnetic sensor values representative of magnetic field measured by that magnetic sensor (6), and determine the difference between the magnetic sensor values of different magnetic sensors facing each other, and determine the distance which each magnetic element (5) has moved with respect to a corresponding magnetic sensor (6) based on said value representative of magnetic field, and determine the magnitude of force in a direction which is parallel to the longitudinal axis (21) of the force sensor (100) and the magnitude of force in a direction which is perpendicular to the longitudinal axis (21) of the force sensor (100), based on said determined distances,

wherein the force sensor comprises an inner mount and an outer mount, and wherein the flexible material is arranged between the inner mount and outer mount and one or more magnetic sensors is attached to the outer mount, and wherein the inner mount and outer mount are each attached to the flexible material, and

wherein the flexible material is configured to have a tubular shape and wherein the inner mount is located within the volume defined by the tubular flexible material, wherein the inner mount protrudes from volume defined by the tubular flexible material, so that the force sensor can measure the magnitude of force applied along a longitudinal axis of the force sensor.

2. A force sensor according to claim 1 wherein the force sensor further comprises a fastener which is arranged to extend through the hole in the inner mount, and which fixes the inner mount to a first object; and wherein the outer mount further comprises a fixing means which fixes the outer mount to a second object, so that the first and second objects are mechanically connected via the force sensor.

3. A force sensor according to any one of the preceding claims wherein the processor is configured to determine the distance, which a magnetic element has moved with respect to the magnetic sensor based on said received value by using a first Look up table which comprises a plurality of predefined values representative of magnetic fields each of the plurality of predefined values being representative of a different magnetic field strength and a corresponding predetermined distance which a magnetic element has moved with respect to the magnetic sensor for each of predefined values representative of magnetic fields.

4. A force sensor according to claim 3 wherein the processor is configured to determine the magnitude of force based on said determined distance by using a second Look up table comprising plurality of predefined forces and a predetermined distance corresponding to each predefined force.

5. A force sensor according to any one of the preceding claims further comprising temperature sensors, which measure temperature, and wherein the processor is further configured to compensate the value representative of magnetic field measured by a magnetic sensor for temperature changes.

6. A cycling cleat for a cycling shoe comprising a force sensor according to any one of the preceding claims, wherein the force sensor comprises, an inner mount and an outer mount, and wherein the flexible material is arranged between, and attached to both, the inner mount and outer mount, and wherein said one or more magnetic sensors is/are attached to the outer mount, wherein the inner mount is fixed to the cycling shoe by a fastener which is received into a hole in the inner mount, and wherein the outer mount is fixed to the cycling cleat by connecting means.

7. An assembly comprising ski binding and ski and/or ski shoe, comprising, a force sensor according to any one of claims 1-5, wherein the force sensor comprises an inner mount and an outer mount, and wherein the flexible material is arranged between, and attached to both, the inner mount and outer mount, and wherein said one or more magnetic sensors is/are attached to the outer mount, wherein, either, the inner mount is fixed to the ski binding by a fastener which is received into a hole in the inner mount, and wherein the outer mount is fixed to the ski by connecting means, or wherein the outer mount is fixed to a ski shoe and the inner mount is connected to the ski binding by a connecting means.

8. A method for determining the magnitude of a force using the force sensor according to any one of claims 1-5, the method comprising the steps of,

(a) applying a force, whose magnitude is to be determined, to cause the magnetic elements (5) to move with respect to the magnetic sensors (6),
(b) measuring magnetic field using the magnetic sensors (6),
(c) providing a processor (15) with values representative of magnetic field measured by each of the magnetic sensors (6),
(d) determining the distance which each magnetic element (5) has moved with respect to a corresponding magnetic sensor (5) based on the values,
(e) determining the magnitude of force in a direction which is parallel to the longitudinal axis (21) of the force sensor (100) and the magnitude of force in a direction perpendicular to the longitudinal axis (21) of the force sensor (100), based on said determined distances.

## Patentansprüche

1. Kraftsensor (100) zum Messen einer Kraftgröße, und der zur Verwendung in einem Fahrradklickpedal (800) oder in einer Skibindung geeignet ist, der Kraftsensor (100) Folgendes umfassend,
mehrere magnetische Elemente (5), die ein Magnetfeld zeigen, das symmetrisch um eine Längsachse (21) des Kraftsensors (100) herum angeordnet ist;
mehrere magnetische Sensoren (6), die ein Magnetfeld messen können, das symmetrisch um die Längsachse (21) des Kraftsensors (100) herum angeordnet ist, und wobei die mehreren magnetischen Sensoren (6) in einer Position angeordnet sind, die der Position der magnetischen Elemente (5) entspricht;
ein oder mehrere flexible Materialien (2), die zwischen den magnetischen Elementen und den magnetischen Sensoren lokalisiert sind, so dass das eine oder die mehreren magnetischen Elemente hinsichtlich des einen oder der mehreren magnetischen Sensoren beweglich sind,
wobei die mehreren magnetischen Elemente (5) auf einer äußeren Befestigung (4) bereitgestellt sind und die mehreren magnetischen Sensoren (6) auf einer inneren Befestigung (3) bereitgestellt sind oder die mehreren magnetischen Elemente (5) auf einer inneren Befestigung (3) bereitgestellt sind und die mehreren magnetischen Sensoren (6) auf einer äußeren Befestigung (4) bereitgestellt sind; und
wobei die innere Befestigung (3) ausgerichtet ist, sich innerhalb der äußeren Befestigung (4) zu erstrecken, und wobei die innere Befestigung (3) aus der äußeren Befestigung (4) vorsteht und wobei das flexible Material (2) zwischen der inneren und der äußeren Befestigung (3, 4) lokalisiert ist und sowohl an der inneren als auch an der äußeren Befestigung (3, 4) befestigt ist; und
wobei die innere Befestigung (3) weiterhin eine durchgehende Öffnung (16) umfasst, die darin definiert ist und die sich parallel zu der Längsachse des Kraftsensors erstreckt und die einen Verschluss (1) aufnehmen kann, der verwendet werden kann, um die innere Befestigung (3) an einem Fahrradschuh oder einem Ski zu sichern; und
wobei der Kraftsensor weiterhin einen Prozessor (15) umfasst, der von jedem der mehreren magnetischen Sensoren Werte empfangen kann, die für das Magnetfeld repräsentativ sind, das durch diesen magnetischen Sensor (6) gemessen wird, und die Differenz zwischen den magnetischen Sensorwerten verschiedener magnetischer Sensoren bestimmen kann, die einander gegenüber stehen, und die Distanz, die sich jedes magnetische Element (5) hinsichtlich eines entsprechenden magnetischen Sensors (6) bewegt hat, auf der Grundlage des Werts bestimmen kann, der für das Magnetfeld repräsentativ ist, und die Größe der Kraft in einer Richtung, die parallel zu der Längsachse (21) des Kraftsensors (100) ist, und die Größe der Kraft in einer Richtung, die senkrecht zu der Längsachse (21) des Kraftsensors (100) ist, auf der Grundlage der bestimmten Distanzen bestimmen kann,
wobei der Kraftsensor eine innere Befestigung und eine äußere Befestigung umfasst und wobei das flexible Material zwischen der inneren Befestigung und der äußeren Befestigung angeordnet ist und ein oder mehrere magnetische Sensoren an der äußeren Befestigung befestigt sind und wobei die innere Befestigung und die äußere Befestigung jeweils an dem flexiblen Material befestigt sind, und
wobei das flexible Material ausgerichtet ist, eine röhrenförmige Form aufzuweisen, und wobei die innere Befestigung innerhalb des Volumens lokalisiert ist, das durch das röhrenförmige flexible Material definiert ist, wobei die innere Befestigung aus einem Volumen vorsteht, das durch das röhrenförmige flexible Material definiert ist, so dass der Kraftsensor die Größe der Kraft messen kann, die entlang einer Längsachse des Kraftsensors angewendet wird.

2. Kraftsensor nach Anspruch 1, wobei der Kraftsensor weiterhin einen Verschluss umfasst, der angeordnet ist, sich durch die Öffnung in der inneren Befestigung zu erstrecken, und der die innere Befestigung an einem ersten Objekt befestigt; und wobei die äußere Befestigung weiterhin ein Befestigungsmittel umfasst, das die äußere Befestigung an einem zweiten Objekt befestigt, so dass das erste und das zweite Objekt über den Kraftsensor mechanisch verbunden sind.

3. Kraftsensor nach einem der vorhergehenden Ansprüche, wobei der Prozessor eingerichtet ist, die Distanz, die sich ein magnetisches Element hinsichtlich des magnetischen Sensors bewegt hat, auf der Grundlage des empfangenen Werts unter Verwendung einer ersten Nachschlagetabelle zu bestimmen, die mehrere vordefinierte Werte umfasst, die für Magnetfelder repräsentativ sind, wobei jeder der mehreren vordefinierten Werte für eine verschiedene Magnetfeldstärke und eine entsprechende vorgegebene Distanz, die sich ein magnetisches Element hinsichtlich des magnetischen Sensors bewegt hat, für jeden der vordefinierten Werte repräsentativ ist, die für Magnetfelder repräsentativ sind.

4. Kraftsensor nach Anspruch 3, wobei der Prozessor eingerichtet ist, die Größe der Kraft auf der Grundlage der bestimmten Distanz unter Verwendung einer zweiten Nachschlagtabelle zu bestimmen, die mehrere vordefinierte Kräfte und eine vorgegebene Distanz umfasst, die jeder vordefinierten Kraft entspricht.

5. Kraftsensor nach einem der vorhergehenden Ansprüche, weiterhin umfassend Temperatursensoren, die eine Temperatur messen, und wobei der Prozessor weiterhin eingerichtet ist, den Wert, der repräsentativ für das Magnetfeld ist, der durch einen magnetischen Sensor gemessen wird, für Temperaturänderungen zu kompensieren.

6. Fahrradklickpedal für einen Fahrradschuh, umfassend einen Kraftsensor nach einem der vorhergehenden Ansprüche, wobei der Kraftsensor eine innere Befestigung und eine äußere Befestigung umfasst und wobei das flexible Material zwischen der inneren Befestigung und der äußeren Befestigung angeordnet ist und an beiden befestigt ist und wobei der eine oder die mehreren magnetischen Sensoren an der äußeren Befestigung befestigt ist/sind, wobei die innere Befestigung durch einen Verschluss, der in einer Öffnung in der inneren Befestigung aufgenommen wird, an dem Fahrradschuh befestigt ist und wobei die äußere Befestigung durch ein Verbindungsmittel an dem Fahrradklickpedal befestigt ist.

7. Anordnung, umfassend eine Skibindung und einen Ski und/oder einen Skischuh, umfassend einen Kraftsensor nach einem der Ansprüche 1 bis 5, wobei der Kraftsensor eine innere Befestigung und eine äußere Befestigung umfasst und wobei das flexible Material zwischen der inneren Befestigung und der äußeren Befestigung angeordnet ist und an beiden befestigt ist und wobei der eine oder die mehreren magnetischen Sensoren an der äußeren Befestigung befestigt ist/sind, wobei entweder die innere Befestigung durch einen Verschluss, der in einer Öffnung in der inneren Befestigung aufgenommen wird, an der Skibindung befestigt ist und wobei die äußere Befestigung durch ein Verbindungsmittel an dem Ski befestigt ist oder wobei die äußere Befestigung an einem Skischuh befestigt ist und die innere Befestigung durch ein Verbindungsmittel mit der Skibindung verbunden ist.

8. Verfahren zum Bestimmen der Größe einer Kraft unter Verwendung des Kraftsensors nach einem der Ansprüche 1 bis 5, das Verfahren die folgenden Schritte umfassend,

(a) Anwenden einer Kraft, deren Größe bestimmt werden soll, um zu bewirken, dass sich die magnetischen Elemente (5) hinsichtlich der magnetischen Sensoren (6) bewegen,
(b) Messen eines Magnetfelds unter Verwendung der magnetischen Sensoren (6),
(c) Bereitstellen einem Prozessor (15) von Werten, die für das Magnetfeld repräsentativ sind, das von jedem der magnetischen Sensoren (6) gemessen wird,
(d) Bestimmen der Distanz, die sich jedes magnetische Element (5) hinsichtlich eines entsprechenden magnetischen Sensors (5) bewegt hat, auf der Grundlage der Werte,
(e) Bestimmen der Größe der Kraft in einer Richtung, die parallel zu der Längsachse (21) des Kraftsensors (100) ist, und der Größe der Kraft in einer Richtung, die senkrecht zu der Längsachse (21) des Kraftsensors (100) ist, auf der Grundlage der bestimmten Distanzen.

## Revendications

1. Capteur de force (100) pour mesurer une amplitude de force, et approprié pour l'utilisation dans une cale de vélo (800) ou une fixation de ski, le capteur de force (100) comprenant

   une pluralité d'éléments magnétiques (5) qui présentent un champ magnétique, symétriquement agencés autour d'un axe longitudinal (21) du capteur de force (100) ;

   une pluralité de capteurs magnétiques (6) qui peuvent mesurer un champ magnétique, symétriquement agencés autour de l'axe longitudinal (21) du capteur de force (100), et dans lequel la pluralité de capteurs magnétiques (6) sont situés dans une position correspondant à la position des éléments magnétiques (5) ;

   un ou plusieurs matériaux flexibles (2) qui sont situés entre lesdits éléments magnétiques et lesdits capteurs magnétiques pour que les un ou plusieurs éléments magnétiques soient mobiles par rapport aux un ou plusieurs capteurs magnétiques,

   dans lequel

   ladite pluralité d'éléments magnétiques (5) sont prévus sur un support extérieur (4), et ladite pluralité de capteurs magnétiques (6) sont prévus sur un support intérieur (3), ou, ladite pluralité d'éléments magnétiques (5) sont prévus sur un support intérieur (3), et ladite pluralité de capteurs magnétiques (6) sont prévus sur un support extérieur (4) ; et

   dans lequel le support intérieur (3) est agencé pour s'étendre à l'intérieur du support extérieur (4), et dans lequel le support intérieur (3) fait saillie à partir du support extérieur (4), et dans lequel ledit matériau flexible (2) est situé entre les supports intérieur et extérieur (3, 4) et est arrimé aux deux supports intérieur et extérieur (3, 4) ; et

   dans lequel le support intérieur (3) comprend en outre un trou débouchant (16) défini dans celui-ci, qui s'étend parallèlement à l'axe longitudinal du capteur de force, et qui peut recevoir un élément de fixation (1) qui peut être utilisé pour fixer le support intérieur (3) à une chaussure de vélo ou ski ; et

   dans lequel le capteur de force comprend en outre un processeur (15) qui peut recevoir, à partir de chacune de la pluralité de capteur magnétique, des valeurs représentatives du champ magnétique mesuré par ce capteur magnétique (6), et déterminer la différence entre les valeurs de capteur magnétique de différents capteurs magnétiques se faisant face, et déterminer la distance selon laquelle chaque élément magnétique (5) s'est déplacé par rapport à un capteur magnétique correspondant (6) sur la base de ladite valeur représentative de champ magnétique, et déterminer l'amplitude d'une force dans une direction qui est parallèle à l'axe longitudinal (21) du capteur de force (100) et l'amplitude d'une force dans une direction qui est perpendiculaire à l'axe longitudinal (21) du capteur de force (100), sur la base desdites distances déterminées,

   dans lequel le capteur de force comprend un support intérieur et un support extérieur, et dans lequel le matériau flexible est agencé entre le support intérieur et support extérieur et un ou plusieurs capteurs magnétiques sont attachés au support extérieur, et dans lequel les support intérieur et support extérieur sont chacun attachés au matériau flexible, et

   dans lequel le matériau flexible est configuré pour avoir une forme tubulaire et dans lequel le support intérieur est situé à l'intérieur du volume défini par le matériau flexible tubulaire, dans lequel le support intérieur fait saillie à partir de volume défini par le matériau flexible tubulaire, pour que le capteur de force puisse mesurer l'amplitude de la force appliquée le long d'un axe longitudinal du capteur de force.

2. Capteur de force selon la revendication 1, dans lequel le capteur de force comprend en outre un élément de fixation qui est agencé pour s'étendre à travers le trou dans le support intérieur, et qui fixe le support intérieur à un premier objet ; et dans lequel le support extérieur comprend en outre un moyen d'arrimage qui arrime le support extérieur à un second objet, pour que les premier et second objets soient mécaniquement raccordés par l'intermédiaire du capteur de force.

3. Capteur de force selon l'une quelconque des revendications précédentes, dans lequel le processeur est configuré pour déterminer la distance selon laquelle un élément magnétique s'est déplacé par rapport au capteur magnétique, sur la base de ladite valeur reçue, en utilisant une première table de conversion qui comprend une pluralité de valeurs prédéfinies représentatives de champs magnétiques, chacune de la pluralité de valeurs prédéfinies étant représentative d'une différente intensité de champ magnétique et d'une distance prédéterminée correspondante selon laquelle un élément magnétique s'est déplacé par rapport au capteur magnétique pour chacune de valeurs prédéfinies représentative de champs magnétiques.

4. Capteur de force selon la revendication 3 dans lequel le processeur est configuré pour déterminer l'amplitude de la force sur la base de ladite distance prédéterminée en utilisant une seconde table de conversion comprenant une pluralité de forces prédéfinies et une distance prédéterminée correspondant à chaque force prédéfinie.

5. Capteur de force selon l'une quelconque des revendications précédentes, comprenant en outre des capteurs de température, qui mesurent une température, et dans lequel le processeur est en outre configuré pour compenser la valeur représentative d'un champ magnétique mesuré par un capteur magnétique pour prendre compte de changements de température.

6.  Cale de vélo pour une chaussure de vélo, comprenant un capteur de force selon l'une quelconque des revendications précédentes, dans laquelle le capteur de force comprend un support intérieur et un support extérieur, et dans laquelle le matériau flexible est agencé entre les support intérieur et support extérieur, et attaché à ces deux derniers, et dans laquelle lesdits un ou plusieurs capteurs magnétiques est/sont attachés au support extérieur, dans laquelle le support intérieur est arrimé à la chaussure de vélo par un élément de fixation qui est reçu dans un trou dans le support intérieur, et dans laquelle le support extérieur est arrimé à la cale de vélo par un moyen de raccordement.

7.  Ensemble, comprenant une fixation de ski et un ski et/ou une chaussure de ski, comprenant, un capteur de force selon l'une quelconque des revendications 1 à 5, dans lequel le capteur de force comprend un support intérieur et un support extérieur, et dans lequel le matériau flexible est agencé entre les support intérieur et support extérieur, et attaché à ces deux derniers, et dans lequel lesdits un ou plusieurs capteurs magnétiques est/sont attachés au support extérieur, dans lequel, soit, le support intérieur est arrimé à la fixation de ski par un élément de fixation qui est reçu dans un trou dans le support intérieur, et dans lequel le support extérieur est arrimé au ski par un moyen de raccordement, soit dans lequel le support extérieur est arrimé à une chaussure de ski et le support intérieur est raccordé à la fixation de ski par un moyen de raccordement.

8.  Procédé pour déterminer l'amplitude d'une force en utilisant le capteur de force selon l'une quelconque des revendications 1 à 5, le procédé comprenant les étapes de

    (a) l'application d'une force, dont la magnitude doit être déterminée, pour faire en sorte que les éléments magnétiques (5) se déplacent par rapport aux capteurs magnétiques (6),
    (b) la mesure d'un champ magnétique en utilisant les capteurs magnétiques (6),
    (c) la fourniture, à un processeur (15), de valeurs représentatives d'un champ magnétique mesuré par chacun des capteurs magnétiques (6),
    (d) la détermination de la distance selon laquelle chaque élément magnétique (5) s'est déplacé par rapport à un capteur magnétique correspondant (5) sur la base des valeurs,
    (e) la détermination de l'amplitude de la force dans une direction qui est parallèle à l'axe longitudinal (21) du capteur de force (100) et de l'amplitude de la force dans une direction perpendiculaire à l'axe longitudinal (21) du capteur de force (100), sur la base desdites distances déterminées.

**Figure1**

EP 3 136 069 B1

**Figure 2**

26

**Figure 3**

**Figure 4**

**Figure 5**

**Figure 6**

**Figure 7**

**Figure 8**

Figure 9

**Figure 10a,b**

Figure 11

**Figure 12a**

900

800

901

**Figure 12b**

900

800

901

**Figure 13a,b,c**

**Figure 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8122773 B
- US 8762077 B
- EP 1586983 A
- JP 2010210461 B
- EP 1380927 A
- GB 2403296 A
- EP 2186657 A
- US 5325869 A